# EUROPEAN PATENT APPLICATION

(11) **EP 4 644 779 A1**
(43) Date of publication of application: **05.11.2025**
(21) Application number: 23917833.8
(22) Date of filing: 27.06.2023
(51) Int. Cl.: F24C 7/08, A47J 36/32, G06F 3/00, G06V 20/68, G06V 10/74, G06V 10/46, G06N 3/08

(54) **APPARATUS AND METHOD FOR CONTROLLING COOKING PROCESS BY USING VISUAL COOKING GUIDE**

(30) Priority: 20.01.2023 KR 20230008706
(71) Applicant: LG Electronics Inc., Yeongdeungpo-gu Seoul 07336 (KR)
(72) Inventor: SONG, Jihyun, Seoul 08592 (KR); LEE, Joong Keun, Seoul 08592 (KR); JUNG, Sanghun, Seoul 08592 (KR); HA, Jeongyo, Seoul 08592 (KR)
(74) Representative: Vossius & Partner Patentanwälte Rechtsanwälte mbB
(86) International application number: PCT/KR2023/008952
(87) International publication number: WO 2024/154875

(57) **Abstract**

The present invention relates to an apparatus and method for controlling a cooking process by using a visual cooking guide, and the cooking apparatus for cooking food ingredients, according to an embodiment of the present invention, comprises: a main body for heating a food ingredient; a camera for capturing an image of the food ingredient stored in the main body; and a control module for carrying out a food ingredient recognition process on the image of the food ingredient captured by the camera, outputting image information corresponding to the recognized food ingredient to a display module of the cooking apparatus or transmitting the image information to a terminal linked to the cooking apparatus, and then setting cooking conditions of the main body to correspond to a time point and image selected from the image information, or monitoring the cooking status of the main body and carrying out an alarm function.

## Description

### [Technical Field]

The present invention relates to an apparatus and method for controlling a cooking process by using a visual cooking guide.

### [Background Art]

An oven is an apparatus that provides a function for cooking various types of food, and a user can cook various food ingredients via the oven. However, cooking methods and temperatures vary depending on the type of food ingredient, and there is a limit to the user's ability to be well-informed of all of these.

For example, the temperature and time required for heating in the oven may be set differently depending on the type of food ingredient such as meat, fish, or vegetables and the type of dish. Because of this, there is a need for a method in which oven users are provided with cooking guides based on each food ingredient and suitable for the food ingredient, and control the oven according to them.

### [Disclosure of the invention]

### [Technical Problem]

The present specification is directed to solving the aforementioned problems, and is intended to enable a user to select a cooking state suitable for a food ingredient through an image or video, so that, according to this, the cooking appliance performs cooking or performs an alarm upon reaching the selected cooking state, thereby increasing cooking efficiency.

Additionally, according to the present specification, it is possible to receive an alarm by checking a previous cooking process through video and selecting an optimal cooking state.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

### [Technical Solution]

A cooking appliance according to an embodiment of the present invention is a cooking appliance cooking a food ingredient, the cooking appliance including a main body for heating a food ingredient, a camera capturing the food ingredient loaded in the main body, and a control module performing a food ingredient recognition process on a food ingredient image captured by the camera, outputting a video information corresponding to the recognized food ingredient to a display module of the cooking appliance or transmitting the video information to a terminal device linked to the cooking appliance, and then, in response to a time point or image selected in the video information, setting cooking conditions of the main body or monitoring the cooking state of the main body to perform an alarm function.

A method for controlling a cooking process by using a visual cooking guide according to an embodiment of the present invention includes a step in which a camera of a cooking appliance captures a food ingredient loaded in a main body of the cooking appliance, a step in which a control module of the cooking appliance performs a food ingredient recognition process on a food ingredient image captured by the camera to retrieve video information corresponding to the recognized food ingredient, a step in which the control module outputs the video information to a display module of the cooking appliance, or transmits the video information to a terminal device linked to the cooking appliance, and a step in which, in response to a selected time point or image in the video information, the control module sets a cooking condition of the main body, or monitors a cooking situation of the main body to perform an alarm function.

A method for controlling a cooking process by using a visual cooking guide according to another embodiment of the present invention includes a step in which a camera of a cooking appliance captures a food ingredient loaded in a main body of the cooking appliance, a step in which a control module of the cooking appliance transmits a food ingredient image captured by the camera to a server, a step in which the server performs a food ingredient recognition process using the transmitted image, retrieves video information corresponding to the recognized food ingredient, and transmits the video information to the control module, a step in which the control module transmits information about a specific time point or image in the video information to the server, and then controls the main body of the cooking appliance to perform cooking, a step in which the control module transmits an image captured during a cooking process of the cooking appliance to a server, and the server uses a received image to generate a message guiding cooking stop or alarm or a cooking state, and transmits the message to the control module, and a step in which, according to the received message, the control module controls cooking, performs an alarm function, or displays a guide message on a display module of the cooking appliance.

### [Advantageous Effects]

When the present invention is applied, a user can select a cooking state suitable for a food ingredient through an image or video, so that, according to this, the cooking appliance performs cooking or performs an alarm upon reaching the selected cooking state, thereby increasing cooking efficiency.

Additionally, when the present invention is applied, it is possible to receive an alarm by checking a previous cooking process through video and selecting an optimal cooking state.

The effects of the present invention are not limited to the aforementioned effects, and various effects of the present invention can be readily derived from the configuration of the present invention.

### [Description of Drawings]

FIG. 1 is a diagram showing components of a cooking appliance including a display module according to an embodiment of the present invention.
FIG. 2 is a diagram showing components of a cooking appliance deprived of a display module according to another embodiment of the present invention.
FIG. 3 is a diagram showing the configuration of a cooking appliance according to an embodiment of the present invention.
FIG. 4 is a diagram showing a process of controlling cooking according to an embodiment of the present invention.
FIG. 5 is a diagram showing a process of controlling a cooking process according to an embodiment of the present invention.
FIG. 6 is a diagram showing a process of performing comparison by buffering images according to an embodiment of the present invention.
FIG. 7 is a diagram showing a video comparison process according to an embodiment of the present invention.
FIG. 8 is a diagram showing that a user selects a specific time point from a time-lapse video by an embodiment of the present invention.
FIG. 9 is a diagram in which the display module displays the recognition result for the food ingredient according to an embodiment of the present invention.
FIG. 10 is a drawing showing a process in which a cooking appliance by an embodiment of the present invention provides an alarm or a video related to cooking to a terminal device via a server.
FIG. 11 is a diagram showing that a server by an embodiment of the present invention recognizes a food ingredient or performs the comparison with existing cooking videos or images in a database to confirm whether the cooking condition has been achieved.

### [Embodiments for implementing the invention]

Hereinafter, embodiments of the present invention will be described in detail with reference to the drawings so that those skilled in the art can easily practice the invention. The present invention may be implemented in various different forms, and is not limited to the embodiments described herein.

In order to clearly describe the present invention, parts unrelated to the description have been omitted, and throughout the specification, the same reference signs are used for identical or similar components. Also, some embodiments of the present invention will be described in detail with reference to the illustrative drawings. In adding reference signs to the components of each drawing, the same components, even if shown on different drawings, may possibly have the same signs. Also, in describing the present invention, when it is determined that a detailed description of a related known structure or function may obscure the gist of the present invention, such detailed description may be omitted.

In describing the components of the present invention, terms such as first, second, A, B, (a), (b), and the like may be used. These terms are only intended to distinguish one component from another, and do not limit the nature, order, sequence, or number of the components. When a certain component is described as being "connected", "coupled", or "linked" to another component, it should be understood that although the both components may be directly connected, coupled or linked to each other, a third component may also be "interposed" between the both components, or the both components may be "connected," "coupled," or "linked" to each other through a third component.

Also, in embodying the present invention, for the convenience of explanation, it may be described using broken-down components, but these components may be implemented in a single device or module, or one component may be implemented to be divided in multiple devices or modules.

In the present specification, an embodiment of a cooking appliance includes, by way of example, an oven, which is a home appliance heating and cooking various food ingredients. Examples of the oven include various home appliances such as a lightwave oven, a microwave oven, and an air fryer.

In the present specification, the cooking appliance includes a camera which captures a food ingredient loaded in the cooking appliance. Also, it may optionally include a display on which a video is ouput. In the case where no display is disposed on the cooking appliance, a video may be output on the display of a terminal device linked with the cooking appliance.

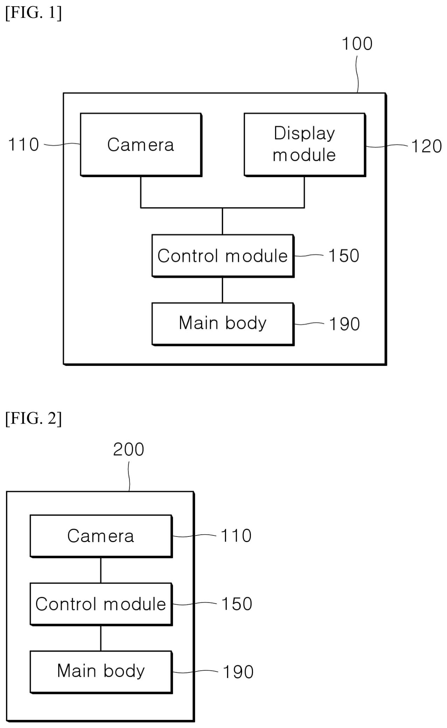

FIG. 1 is a diagram showing components of a cooking appliance including a display module according to an embodiment of the present invention.

The cooking appliance 100 includes a camera 110, a display module 120, a control module 150, and a main body 190. FIG. 1 has been prepared with emphasis on a configuration in which the cooking appliance 100 captures food ingredients and processes information related thereto, and the cooking appliance 100 includes components necessary for cooking. As an example of the components included in the cooking appliance 100, components necessary for heating food, such as a door or a heating part, and a lamp, are all included in the main body 190. And the operation of the main body 190 is controlled by the control module 150.

The camera 110 is disposed inside the main body and captures an area where cooking takes place. The camera 110 may be disposed on a ceiling, a side surface, or the like inside the main body. Also, one or more cameras 110 may be disposed, and in the case where two or more cameras 110 are disposed, food ingredients inserted into the main body can be captured from different positions. The camera 110 may capture the cooking process of the food ingredients as images at regular time intervals or as a moving image. Also, the camera 110 may capture a time-lapse moving image.

The display module 120 may be disposed outside the main body 190 to visually output variety of information. The display module 120 may further include a touch module capable of receiving touch input, and a user may control the operation of the cooking appliance 100 by performing touch input on an image displayed on the display module 120.

The control module 150 is responsible for the control of the cooking appliance 100. When food ingredients are inserted into the main body 190, the camera 110 may be controlled to capture the inserted food ingredients. Also, the control module 150 may calculate size and weight information of the captured food ingredients. In an embodiment, a weight sensor may be disposed in the main body 190, and the control module 150 may calculate the weight of the food ingredient using a value sensed by the weight sensor.

Also, the control module 150 may perform communication with a server or a terminal device. To this end, the control module 150 may transmit and receive data according to a specific communication protocol (for example, LTE-A, 5G communication, Wi-Fi, Bluetooth, ZigBee, etc.).

The control module 150 may include a predetermined storage medium, and the control module 150 may include a database using the storage medium. Alternatively, the cooking appliance 100 may include a separate database. Alternatively, the database may be included in an external server, and the control module 150 may communicate with the server and access information stored in the server's database.

Also, information output to the display module 120 may be transmitted by the control module 150 to a server or a terminal device, and the display of the terminal device may output that information.

FIG. 2 is a diagram showing components of a cooking appliance deprived of a display module according to another embodiment of the present invention. Descriptions of the same components will be substituted by the descriptions provided with reference to FIG. 1. It is a configuration in which the display module is excluded from the configuration of FIG. 1. The control module 150 may transmit information related to food ingredients inserted into the main body 190, information regarding the cooking state, or the like to a server or a terminal device, and may receive a message requesting to stop or resume the cooking.

The cooking appliance 100 shown in FIGS. 1 and 2 cooks food ingredients, and includes the main body 190 heating food ingredients, the camera 110 capturing the food ingredients loaded into the main body 190, and the control module 150.

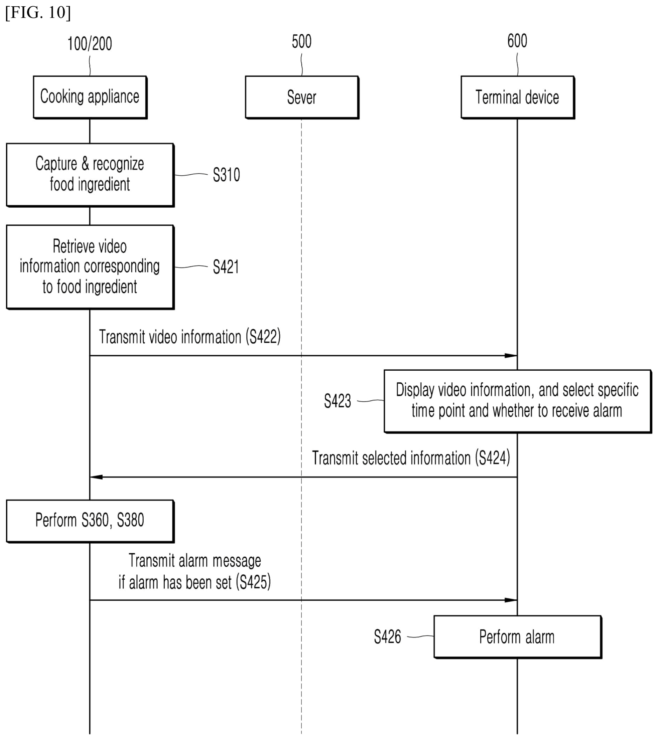

The control module 150 performs a food ingredient recognition process on the food ingredient image captured by the camera 110 to retrieve video information corresponding to the recognized food ingredient. And the control module 150 outputs the video information to the display module 120 of the cooking appliance 100, or transmits it to a terminal device 600 (see FIG. 10) linked to the cooking appliance 100. Thereafter, the control module 150 sets cooking conditions of the main body 190 in response to a time point or image selected by the user from the video information, or performs an alarm function by monitoring the cooking state of the main body 190.

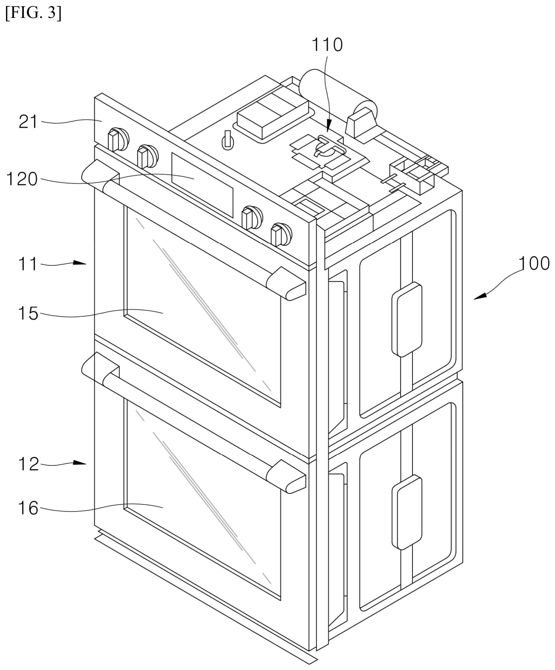

FIG. 3 is a diagram showing the configuration of a cooking appliance according to an embodiment of the present invention. FIG. 3 corresponds to an embodiment, and the cooking appliance of the present invention may include a shape or components different from that or those in FIG. 3.

The main body includes an operation part 21, doors 11, 12, and cooking chambers 15, 16 which are opened and closed by the doors 11, 12.

The display module 120 is disposed on the operation part 21 through which the cooking appliance 100 is operated. A user may check a cooking guide through the display module 120. The camera 110 may be disposed in the upper end of the cooking appliance 100 to capture the inside of the cooking chamber. The cooking chambers 15, 16 may be opened or closed by the doors 11, 12. In the inside the cooking chambers 15, 16, there may be disposed a shelf or a support on which food ingredients are disposed, and a lamp for heating. The camera 110 may capture the inside of the cooking chambers 15, 16.

Although the operation part 21 and the display module 120 are separated in the drawings, a configuration in which an interface for operation is displayed on the display module 120 is also included in an embodiment of the present invention. Also, when the display module 120 is excluded from the cooking appliance 100 of FIG. 3, it becomes the embodiment of FIG. 2.

Hereinafter, a method will be discussed in which a camera installed inside the cooking appliance 100 such as an oven collects and stores food images and a user directly adds or removes a recognition target item to provide a cooking guide and control cooking.

When an embodiment of the present invention is applied, cooking setting (oven operation mode, time, temperature) information for the recognition item may be stored in a database (DB) form, and when the cooking appliance 100 recognizes the cooking target, the cooking environment may be automatically set.

Also, by using the previously captured cooking moving image, a user may select a cooking state for which the user wish to receive an alarm, and the user may check the alarm. Alternatively, when the desired cooking state is reached, the cooking appliance 100 may terminate the corresponding cooking process.

Instead of setting a specific cooking state using text or numbers, the user may select an optimal cooking state based on video, thereby easily controlling the cooking process of the cooking appliance 100.

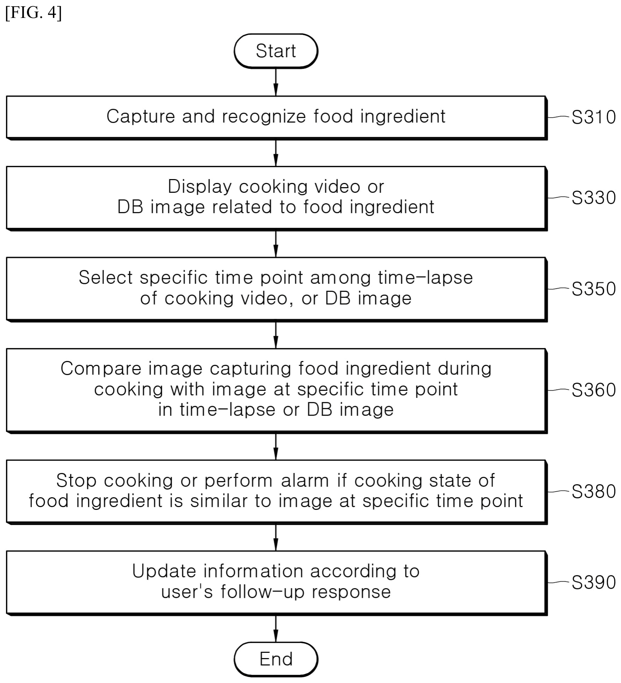

FIG. 4 is a diagram showing a process of controlling cooking according to an embodiment of the present invention. In the case where cooking videos related to a food ingredient input into the cooking appliance 100, 200 exist, the food ingredient is captured and recognized to control the cooking process through corresponding cooking videos or DB images.

When a user inputs a food ingredient into the cooking appliance 100, 200, the camera 110 captures the food ingredient, and the control module 150 processes the captured image to recognize the food ingredient (S310). The control module 150 displays a cooking video or DB image stored in relation to the food ingredients through the display module 120 (S330). In the case of the cooking appliance 200 deprived of the display module 120, a terminal device linked to the cooking appliance 200 may display a cooking video or a DB image.

The cooking video is, by way of example, a moving image or a bundle of images captured during the process of cooking the food ingredient previously recognized by the cooking appliance 100, 200. Such moving image or bundle of images includes information about a certain time point (for example, in a unit of time of 5 seconds, 10 seconds, or 30 seconds, 1 minute, 2 minutes, 3 minutes, etc.) and information about the heating temperature or cooking mode set during cooking. Also, as an embodiment, the cooking video is a time-lapse moving image recording changes of the food ingredient during the cooking process.

For example, in the case of heating meat, during the progress of heating the meat, the camera 110 continuously captures changes in its surface color and volume, and stores them as a moving image or a bundle of images. At this time, information on the time for which the cooking has proceeded (cooking time) and information on the temperature of heat during the cooking process (cooking temperature) correspond to meta information, and the meta information may be combined to each moving image or image.

Also, in addition to the cooking video, separate images or moving images may be sequentially recorded in the database. For example, images or moving images capturing changes in the surface color of the food ingredient by type of meat, heating temperature, and heating time may be stored in the database in combination with time information/cooking temperature and the like.

Thereby, the control module 150 displays a cooking video or DB image stored internally or a cooking video or DB image stored externally such as on a server, and then the user may select a specific time point. For example, it is possible to select a specific time point among the time-lapse of the cooking video, or to select a specific image among the DB images (S350). Such selection may include information regarding a heating temperature.

The control module 150 controls the main body 190 to cook the input food ingredient by heating it at the corresponding heating temperature (or a heating temperature set automatically/manually), and when the camera 110 captures the food ingredient, the captured image is compared with the image at the specific time point in the time-lapse or the DB image as previously mentioned (S360). During the comparison process, the control module 150 may refer to an image at a previous time point of the time-lapse of the corresponding video or an image of a previous time point among DB images.

Additionally, the image of the food ingredient captured during the S360 process is displayed on the display module 120 or the terminal device carried by the user, so that the user can check the current cooking state.

Then, the control module 150 compares whether the cooking state of the food ingredient is similar to the image at the specific time point, and if similar, it stops cooking or performs an alarm (notification, alarming) (S380). In an embodiment, the performing of the alarm is that the cooking appliance 100, 200 outputs a predetermined sound, or that the linked terminal device 600 (see FIG. 10) outputs a notification sound. Also, in an embodiment, the alarm is that a text or image indicating that the cooking state has reached a specific state (a time point selected by the user) is output to the terminal device 600 (see FIG. 10).

Thereafter, when the user performs a follow-up response, the control module 150 updates the information according to this (S390). In the case where the cooking appliance 100, 200 is turned off and cooking is terminated, the processes in S360 and S380 of the control module 150 are valid, and the control module 150 stores the results thereof, so that, in a similar case later, the same decision process can be performed.

On the other hand, in the case where the user resumes the cooking after S380, the processes in S360 and S380 of the control module 150 are invalid or require modification, and the control module 150 stores the results thereof, so that, in a similar case later, the comparison and decision process can be performed by reflecting the follow-up response action.

The user selects the food ingredient and a cooking method corresponding thereto, and selects a menu of the cooking appliance 100, 200. The user may set the heating temperature, heating mode, time, and the like. However, it is cumbersome for the user to check the optimal cooking conditions according to the food ingredient through a manual, and there is a limitation in selecting cooking conditions suitable for the amount of the food ingredient.

Also, the user may open the door of the cooking appliance 100, 200 during cooking in order to check the cooking process, and in this process, heat loss may occur, resulting in an increase in cooking time.

Because of this, the user may select a cooking video or an image stored in the database corresponding to a desired cooking state, and the cooking appliance 100, 200 may compare an image of the food ingredient captured during the cooking process with the image selected by the user, to determine whether further heating of the food ingredient is needed or to provide notification information to the user.

When the embodiment of FIG. 4 is applied, the cooking appliance 100, 200 may automatically recognize the food ingredient and automatically set the cooking settings, or may provide related information to the user. Also, in the process of the camera capturing the food ingredient, cooking state information may be identified.

Hereinafter, processes of selecting/adding/deleting an item of a food ingredient to be recognized using images stored in the cooking appliance or server, selecting an image corresponding to a state at which the user wants to receive an alarm with the use of a cooking moving image, and receiving an alarm at the corresponding state time point will be described.

The video information in the above-described embodiment is, by way of example, a time-lapse video of the cooking process, a bundle of images captured at predetermined time intervals during the cooking process, or a set of images constructed in relation to the capturing of the corresponding food ingredient.

For example, the video information may be a cooking video captured in the past. In this case, the video information is, by way of example, video information stored at the previous time by the cooking appliance 100 of the user's own having captured the cooking process of a food ingredient loaded into the main body 190.

Additionally, the video information may be database video generated by another user or a server, or constructed by the cooking appliance 100 receiving it from another device. In this case, the video information is, by way of example, video information storing an image of a cooking state of a food ingredient, which the control module 150 has stored and received from other device.

Such database video may correspond to a cooking guide provided by a large-scale mart or an online shopping mall. For example, a large-scale mart or an online shopping mall may distribute an image, moving image or the like for cooking a specific product when selling the corresponding product. The control module 150 may register the distributed image or moving image, so that an image or a specific time point of the moving image corresponding to the cooking state of the purchased food ingredient can be selected.

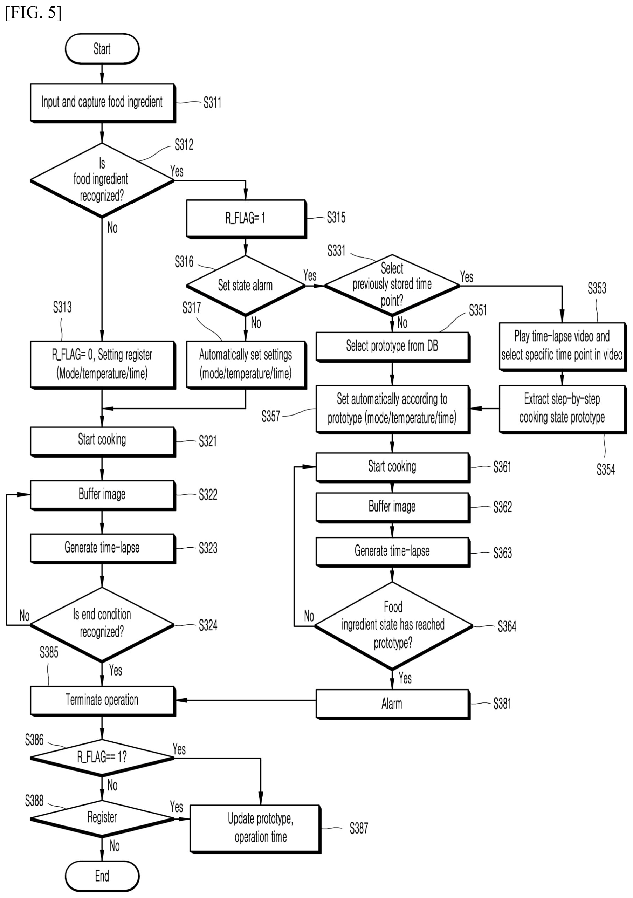

FIG. 5 is a diagram showing a process of controlling a cooking process according to an embodiment of the present invention.

When a food ingredient is input into the cooking appliance 100, 200, the camera 110 captures the food ingredient (S311). The control module 150 recognizes the food ingredient using the captured image. To this end, the control module 150 may store existing initial images of food ingredients.

If the food ingredient is not recognized (S312), the control module 150 sets R_FLAG to 0, and sets and registers cooking conditions according to the control of the user (S313). The cooking conditions include a cooking mode, a heating temperature, a heating time, and the like.

Meanwhile, if the food ingredient is recognized in S312, the control module 150 sets R_FLAG to 1 (S315). The video information corresponding to the recognized food ingredient may be displayed on a display module or the terminal device 600 (see FIG. 10). And when the user does not set a state alarm (S316), the control module 150 automatically sets cooking settings suitable for the recognized food ingredient (S317). The cooking conditions automatically set include a cooking mode, a heating temperature, a heating time, and the like.

Meanwhile, when the user sets a state alarm in S316, the control module 150 may select a specific time point of the stored cooking video to receive the state alarm, or select a desired state from among stored images to receive the alarm (S331).

If the user selects a method in which the user selects a specific image from the displayed video information corresponding to the recognized food ingredient, so that the user receives an alarm when the state of the food ingredient becomes similar to the selected image ('No' flow from S331), the control module 150 displays a plurality of images on the display module 120, and the user selects one or more images which are prototypes (S351).

Meanwhile, when the user selects receiving a state alarm by selecting a specific time point of the stored cooking video ('Yes' flow from S331), the control module 150 displays the cooking video on the display module 120, and the user selects a specific time point in the playback of the video (time-lapse video playback) (S353). In the case where the specific time point is selected, information such as the temperature or cooking time at each time point recorded during the recording of the corresponding past cooking video may also be selected.

And the control module 150 extracts one or more prototype images for the step-by-step cooking state with the selected time point as a center (S354).

The prototype selected/extracted in S351 or S354 may serve as comparison data for checking the cooking state of the food ingredient during the later cooking process of the food ingredient.

And the control module 150 automatically sets the cooking conditions of the main body 190 according to the selected/extracted prototype (S357). At this time, the cooking conditions to be set are cooking conditions that reflect the cooking time or cooking temperature set in the metadata combined with the video information.

When the cooking conditions are set in each of steps S313, S317, and S357, the cooking appliance 100, 200 starts cooking (S321, S361), and during the cooking process, the camera 110 captures the food ingredient and buffers the image (S322, S362). And the control module 150 generates time-lapse information corresponding to the captured image (S323, S363).

Generating the time-lapse information includes an embodiment in which the current state of the food ingredient image (buffered as an image) and information on the cooking conditions (heated temperature, current temperature inside the oven, elapsed time since cooking started, change in weight of food ingredient, and the like) are generated to correspond to each other.

Thereafter, it is possible to check the end of cooking or the alarm state.

For example, the flow of S321 to S324 is an embodiment in which a state alarm is not received during the cooking process. In this case, the control module 150 determines whether the end condition according to the cooking conditions set in S313/S317 has been reached (S324). And if not reached, S322 to S324 are repeated. If the end condition is reached, the control module 150 terminates the cooking operation of the cooking appliance (S385).

Meanwhile, the flow of S361 to S381 is an embodiment in which a state alarm is received during the cooking process. In this case, the control module 150 compares the state of the selected food ingredient with the prototype image in S351/S353, and determines whether the cooked state of the food ingredient has reached the set prototype (S364).

And if not reached, S361 to S364 are repeated. If the state of the food ingredient in S364 is the same as or similar to the prototype image, the control module 150 performs a visual or auditory alarm to the user (S381), and terminates the cooking operation of the cooking appliance (S385).

When the cooking operation ends, depending on the value of R_FLAG, that is, depending on whether the food ingredient was recognized, if the food ingredient was recognized, the previously stored cooking video is updated with the image and time-lapse information generated in the process S322/S323 or S362/S363 (S387). Of course, the update may be performed optionally.

Meanwhile, in the case where the food ingredient was not recognized (S312~S313), depending on the selection of the user as to whether to register the food ingredient, if Yes (S388-Yes), the previously stored cooking video is updated with the image and time-lapse information generated in the process S322/S323 (S387).

The prototype is, by way of example, an image of the state of the food ingredient according to a certain stage in the cooking process. For example, an image when a food ingredient is first input, an image when cooked for 1 minute, an image when cooked for 2 minutes, an image at the time of 3 minutes before cooking of the food ingredient is complete, an image when cooking of ingredients is complete, and the like may be stored in a database, or may be generated in the process of creating the cooking video.

Also, images representing the cooking state may be extracted from the cooking video at predetermined time intervals. For example, in the case where the playback time of the cooking video is 10 minutes, images may be extracted at 1-minute intervals, and a total of 11 prototype images including the initial image may be generated.

Using the plurality of prototypes, the control module 150 may compare the change process of the food ingredient with the images.

As described in S388, the control module 150 controls the camera 110 to capture the cooking situation of the main body 190, and then, after the cooking of the main body 190 has been completed, it stores the video information captured by the camera 110 or replaces previously stored video information with the captured video information, so that it is possible to identify the better cooking process later with the video information, and perform automatic settings and alarm settings for the cooking process.

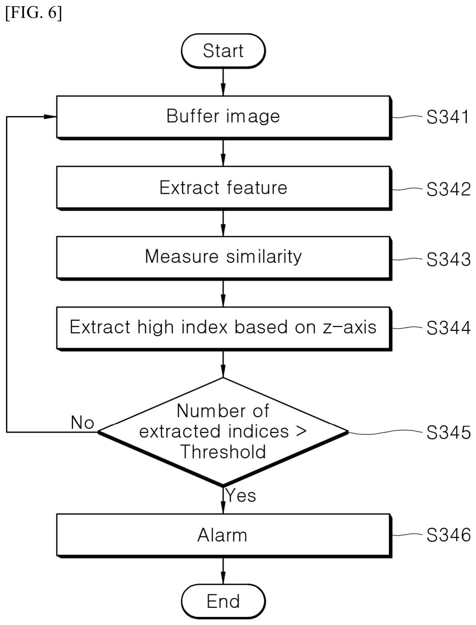

FIG. 6 is a diagram showing a process of performing comparison by buffering images according to an embodiment of the present invention.

As cooking progresses, the camera 110 captures and buffers images. For example, the camera 110 may capture K images x*y*K at a specific resolution x*y (S341). The control module 150 extracts features from N images (feature extraction) (S342).

The feature extraction may be performed in three dimensions. And the control module 150 measures similarity by comparing the extracted features with either a prototype image previously stored in the DB (selected in S351) or an image corresponding to a specific time point within a previously stored video (selected in S353) (S343).

In an embodiment, during the similarity measurement process, the control module 150 may extract a high index based on the z-axis (S344). And if the number of the extracted indices is equal to or greater than a threshold value, the control module 150 determines it as a similar state (S345), and performs an alarm (S346). If 'No' in S345, the control module 150 may repeat the processes of capturing an image and performing the comparison during the cooking operation.

In the embodiment of FIG. 6, it is assumed that the image has a resolution of 1920×1080. In this case, the control module 150 captures K images according to a predetermined time interval (10 seconds, 20 seconds, 30 seconds, 1 minute, or the like) (S341). And the control module 150 may extract features of 30×30×512 from these K images, each of which has a resolution of 1920×1080 (S342).

And based on these features, the control module 150 may measure similarity with the image of a specific step selected for each step in cooking in combination with a background image (S343). At this time, the control module 150 may extract an index based on the z-axis by arranging the extracted features along the z-axis (S344). And, by comparing the similarity with the image of the cooking step for which the alarm has been set previously, if the similarity is equal to or greater than a certain reference, the alarm may be performed.

The performing of the alarm in S380 of FIG. 4, S381 of FIG. 5, S346 of FIG. 6, or the like performs the image comparison using an image of the situation where a loaded food ingredient is cooked, which has been captured by the control module 150, and an image at a selected time point from video information (video captured in a previous cooking process or video from a database). And the control module 150 may stop the cooking if the similarity between the image at the selected time point and the captured image (the video captured of the food ingredient currently being cooked) is greater than a reference value. Alternatively, the control module 150 may perform an alarm through the display module 120, or transmit an alarm message to the terminal device 600 (see FIG. 10).

In addition, during the process of performing cooking, the control module 150 may output, through the display module 120, an image of the food ingredient cooked inside the main body 190, or may transmit the captured image to a terminal device. At this time, in addition to the currently cooked state, remaining time information until the scheduled completion time point (the time point selected by the user from the video information) or information regarding cooking progress rate may also be output through the display module 120 or the terminal device 600 (see FIG. 10).

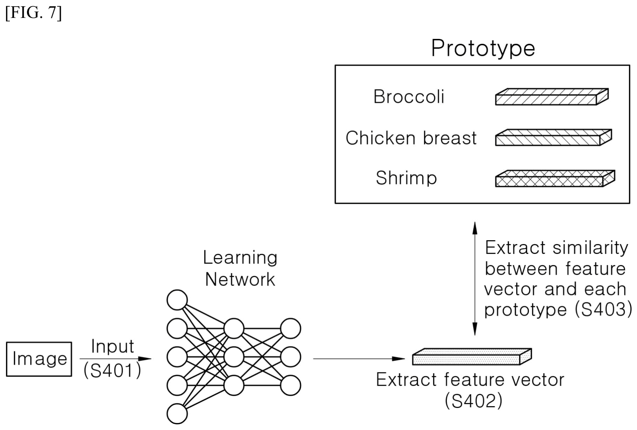

FIG. 7 is a diagram showing a video comparison process according to an embodiment of the present invention. In the present specification, as an embodiment of video recognition, target classes are defined to configure and train the network so that similarity is high among the same classes and similarity becomes low between different classes. In case of adding a class, it is possible to recognize by adding a prototype for the corresponding class without retraining the network.

As shown in FIG. 7, the control module 150 inputs the image into the learning network and extracts a feature vector (S401, S402).

The control module 150 may extract the similarity between the extracted feature vector and each prototype (S403). Here, the prototype may be determined according to each food ingredient class (broccoli, chicken breast, shrimp, or the like), and the feature extracted from the input image may be compared with the class-based image of each food ingredient.

As an embodiment of the learning network, a PANet (Prototype Alignment Network) may be used. This uses the features of the learned prototypes, and each learned prototype is a technique that can represent one class.

The classes of food ingredients input into cooking appliances such as ovens are limited, and also, similar types of food ingredients may be repeatedly cooked according to the user's eating habits.

Because of this, when adding a class, the control module 150 does not need to retrain the learning network. That is, the control module 150 may recognize the food ingredient by simply adding the prototype of the corresponding class.

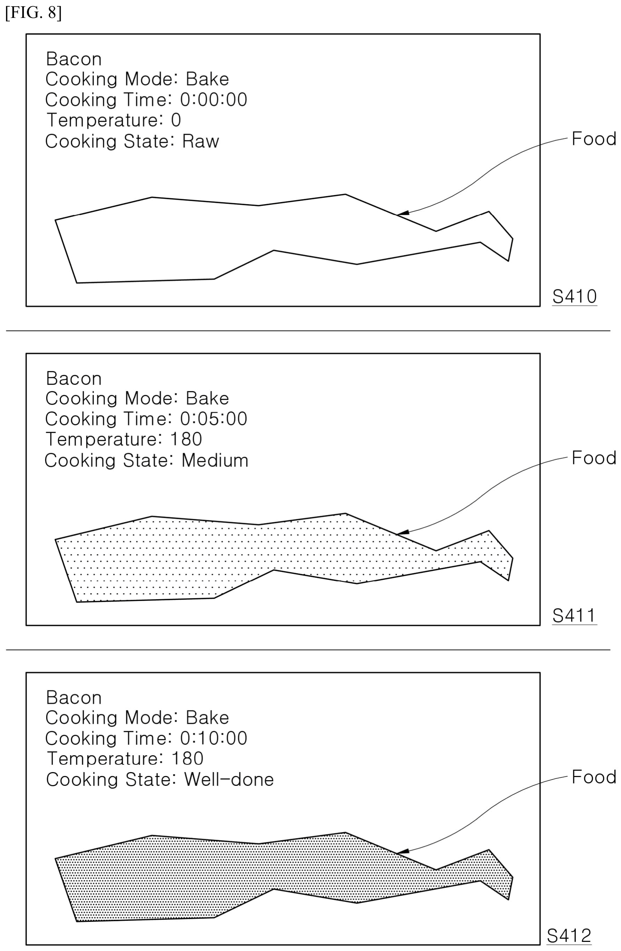

FIG. 8 is a diagram showing that a user selects a specific time point from a time-lapse video by an embodiment of the present invention. The video is, by way of example, composed of multiple images, or is a moving image. In the case of the moving image, when the user play the video displayed on the display module 120 or the terminal device, the display module 120 or the terminal device displays an image (Food of S411) of the initially introduced food ingredient (Food of S410) being cooked through heating over time.

And the display module 120 or the terminal device may display an image (Food of S412) captured when the food ingredient has reached a fully heated state. When the user selects the corresponding time-lapse time point while an image such as S412 is being displayed, the control module 150 may set the image indicated by the Food of S412 as a prototype image, and thereafter, the cooking appliance 100, 200 may capture the food ingredient being cooked, and compare the captured image with the prototype image.

Also, on the left side of the image in FIG. 8, meta information such as the cooking time (the elapsed time after the initial food ingredient input) and the heating temperature may be displayed. The meta information may be displayed in combination with the video information. For example, S410 is an image immediately after the food ingredient is input, in which the cooking mode is displayed as Bake; the cooking time, as 0 minutes; the cooking temperature, as 0 degree; and the cooking state, as "Raw."

S411 is an image of the state after heating at 180 degrees for 5 minutes, in which the cooking mode is displayed as Bake; the cooking time, as 5 minutes; the cooking temperature, as 180 degrees; and the cooking state, as "Medium."

S412 is an image of the state after heating at 180 degrees for 10 minutes, in which the cooking mode is displayed as Bake; the cooking time, as 10 minutes; the cooking temperature, as 180 degrees; and the cooking state, as "Well-done."

Therefore, when the user selects a specific image, the control module 150 may apply the corresponding heating temperature and mode to the cooking. Also, when comparing images, the control module 150 may refer to the comparison between the physical properties of the food ingredient included in the prototype (for example, size, surface area, weight) and the physical properties of the food ingredient to be cooked.

That is, the control module 150 may use the weight or size information of the food ingredient included in the meta information of the video information, or compare the size of the food ingredient in the video information with the size of the food ingredient loaded in the main body 190 to set the cooking temperature or cooking time of the main body 190.

For example, the time required to reach the optimal cooking state may differ between heating 200g of pork belly and heating 500g of pork belly. Therefore, it is possible to improve the accuracy of the image comparison result by reflecting time or temperature factors by comparing the meta information (weight, size, area, or the like) on the physical properties of the food ingredient of the cooking video with the physical properties of the food ingredient to be currently cooked.

When the user selects the image of S411 to receive an alarm in order to add seasoning at the cooking state of S411, the control module 150 proceeds with the cooking by reflecting the meta information of the image of S411 on the food ingredient. Also, the control module 150 performs an alarm at the time of reaching the state of the food ingredient with high similarity to the image of S411 during the cooking process. At this time, the control module 150 may predict the time information to reach the corresponding alarm based on the weight of the food ingredient.

For example, if S411 of FIG. 8 is an image of heating 200 g of food ingredient at 180 degrees for 5 minutes and the input food ingredient is 500 g, the control module 150 can calculate the time in proportion to the weight as "5 minutes * 500 g/200 g - a." At this time, the term 'a' denotes a time to prevent the food ingredient from being overcooked depending on the type of food ingredient. For example, in the case of pork belly, the term 'a' may be 2 minutes, and in the case of shrimp, the term 'a' may be 3 minutes, and so on. Of course, depending on the food ingredient, the term 'a' may have a positive value or a negative value. That is, in order to prevent the food ingredient from being overcooked or undercooked, depending on the type of food ingredient, the control module 150 can increase or decrease the time proportionally calculated according to factors such as weight or size.

Accordingly, as the predicted time approaches, the control module 150 can increase the precision of image processing and compare the prototype image with the current image of the food ingredient, thereby increasing accuracy.

The control module 150 may separately construct a learning database, which includes a time-lapse video or an image for each food ingredient. Of course, the learning database may include meta information of cooking conditions (mode, time, temperature, or the like) related to each video or image.

The control module 150 according to an embodiment of the present invention records and stores the cooking process of food ingredient that has been performed in the past by the user who uses the cooking appliance 100, 150, thereby enabling the user to set an alarm at a specific cooking time point.

Also, when the user instructs cooking based on a specific cooking time point, the control module 150 may control the cooking appliance 100, 150 to cook the food ingredient by reflecting the cooking conditions performed up to that time point.

According to an embodiment of the present invention, the control module 150 can perform image processing with, as the recognition target, the food ingredient that an actual customer needs and uses, thereby continuously improving food ingredient recognition performance in response to the user's cooking methods.

Also, since the image processings are performed based on the informations of the food ingredient used by the user, the food ingredient recognition time and comparison time can be reduced.

Therefore, the image recognition performance of the control module 150 can increase with the lowered possibility of misrecognition, so that it is possible to accurately guide the cooking and perform the alarm.

And the user may add or remove items of food ingredients to be recognized, and as a result, the recognition accuracy can be further improved.

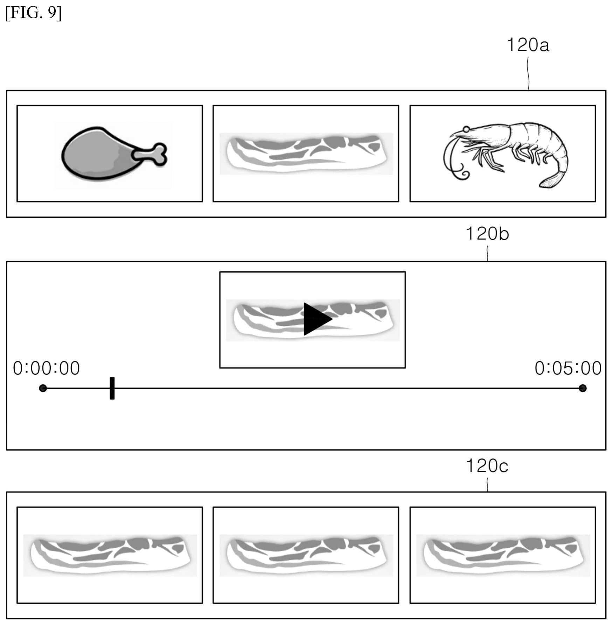

FIG. 9 is a diagram in which the display module displays the recognition result for the food ingredient according to an embodiment of the present invention. Three food ingredient videos are presented as candidates in response to the loaded food ingredient. Here, when the user selects a past cooking video related to the pork belly located in the middle, a triangular button (PLAY) for playing the video is displayed as shown in 120b. Also, in the lower side of 120b, a progress bar may be disposed to indicate that the cooking video has a length of 5 minutes and to allow the user to check a specific time point in the video.

Meanwhile, by displaying several key images from the cooking video, multiple images may be displayed as shown in 120c so that the user can select a specific image. The user can select a specific image (for example, the image in the right side of 120c) to set an alarm.

In the recognition process, the control module 150 extracts a feature vector from the image captured of the loaded food ingredient, then calculates the similarity between the extracted feature vector and the feature vector of the video information to retrieve the video information corresponding to the food ingredient. At this time, the control module 150 may analyze the speech spoken by the user near the cooking appliance 100, convert it into text, and include it in a single feature vector.

It can improve the accuracy of food ingredient recognition not only by the name of a specific food ingredient but also by references to the past cooking process, for example, through words like "like the shrimp which I have eaten last week."

Also, the control module 150 accumulates and stores the information selected by the user in FIG. 9, so that it can improve the recognition performance of the captured food ingredient. Also, the cameras may be disposed not only in the upper side in the main body 190 but also in the side surface or lateral upper surface, and by using images captured from multiple directions, the accuracy of recognition can be improved.

FIG. 10 is a drawing showing a process in which a cooking appliance by an embodiment of the present invention provides an alarm or a video related to cooking to a terminal device via a server.

The control module 150 of the cooking appliance 100/200 captures the food ingredient, and performs recognition (S310). This is replaced with the description of FIG. 4 above. And the control module 150 of the cooking appliance 100/200 retrieves the video information corresponding to the food ingredient (S421). The control module 150 of the cooking appliance 100/200 transmits the retrieved video information to the terminal device 600 (S422), and the terminal device 600 displays the video information.

And the user selects a specific time point from the video information displayed on the terminal device 600, and selects whether to receive an alarm at that time point (S423). The terminal device 600 transmits the selected information (specific time point and whether there is an alarm) to the cooking appliance 100/200 (S424). Thereafter, the cooking appliance 100, 200 performs steps S360 and S380 of FIG. 4, and then transmits an alarm message to the terminal device 600 if the alarm has been set (S425). Thereafter, the terminal device 600 performs the alarm (S426).

The control module 150 of the cooking appliance 100/200 and the terminal device 600 may directly transmit and receive data. Alternatively, a server 500 may mediate communication between the control module 150 of the cooking appliance 100/200 and the terminal device 600.

Meanwhile, according to another embodiment of the present invention, the control module 150 of the cooking appliance 100, 200 may capture the food ingredient, and then transmit it to the server 500, and the server 500 may retrieve the video information corresponding to it. At this time, the server 500 may store the video information according to the identification information of the cooking appliance 100, 200.

And the video captured by the cooking appliance 100, 200 during the cooking process may also be uploaded to the server 500.

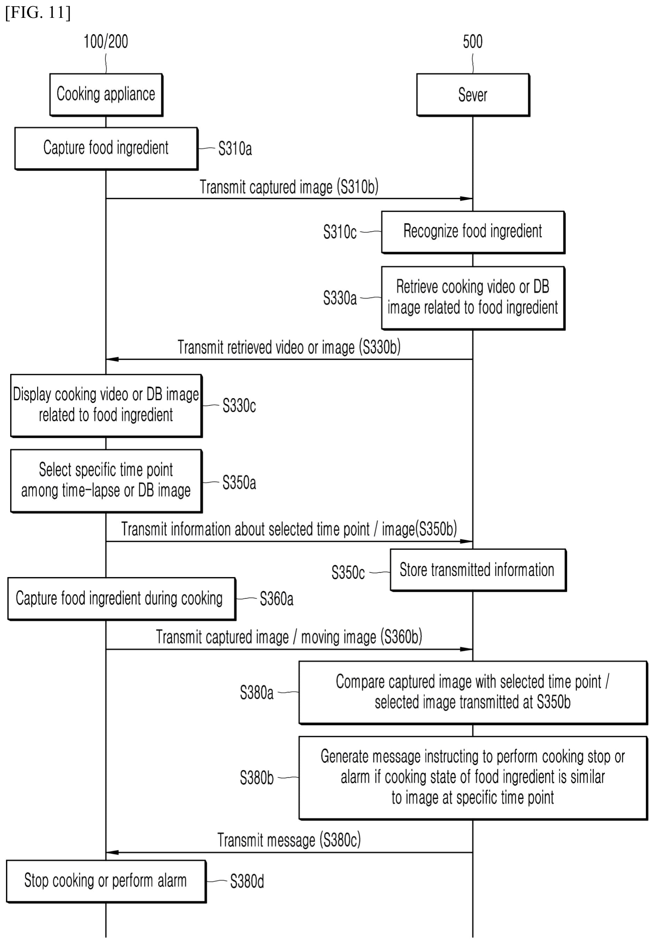

FIG. 11 is a diagram showing that a server by an embodiment of the present invention recognizes a food ingredient or performs the comparison with existing cooking videos or images in a database to confirm whether the cooking condition has been achieved. Some of the processes shown in FIGS. 4, 5, and 6 are performed on the server 500. Reference is made to FIG. 4.

When the user inputs a food ingredient into the cooking appliance 100, 200, the camera 110 captures the food ingredient, and the control module 150 transmits the captured food ingredient image to the sever 500 (S310a, S310b). The server 500 recognizes the food ingredient using the received image (S310c). And the server 500 retrieves the cooking video or DB image stored in relation to the food ingredient (S330a), and transmits the retrieved video or image to the cooking appliance 100, 200 (S330b).

The display module 120 of the cooking appliance 100, 200 displays the cooking video or DB image (S330c).

The control module 150 may play the displayed cooking video or DB image as a time-lapse. When the user selects a specific time point from the cooking video or a specific image from the DB image, the control module 150 transmits the information about the selected time point or image to the server 500 (S350a, S350b). The server 500 stores the transmitted information (S350c).

Thereafter, the cooking appliance 100, 200 performs the cooking. Under the control of the control module 150, the camera 110 captures the food ingredient during the cooking (S360a). And the control module 150 transmits the captured image or moving image to the server 500 (S360b). In this process, the control module 150 may set the cooking conditions using the meta information included in the image or moving image corresponding to the selected time point.

The server 500 compares the captured image or moving image with the image at the specific time point from the time-lapse or the DB image, which has been previously selected by the user (S380a). And the server 500 compares whether the cooking state of the food ingredient is similar to the image at the specific time point, and if similar, it generates a message instructing to perform cooking stop or alarm (Notification, Alarming), and transmits the message to the cooking appliance 100, 200 (S380b, S380c).

Alternatively, if it is necessary to continue the cooking, the server 500 may generate a message guiding the cooking state. For example, the message guiding the cooking state may be, by way of example, a message providing time guidance such as "5 minutes remain until the set cooking state" or "60% of the cooking has been completed so far," or a message guiding the process in which the cooking progresses.

Thereafter, the control module 150 receives the message, and then either stops the cooking or performs the alarm (S380d). If it is determined as being dissimilar at S380b, the steps from S360a to S380b may be repeated.

The embodiment of FIG. 11 may also be applied to the embodiment such as in FIG. 5 or FIG. 6, in which the food ingredient recognition and the confirmation of whether cooking conditions have been reached are performed. In other words, the server 500 performs some of the functions previously performed by the control module 150, and transmits the corresponding results to the control module 150.

Additionally, the server 500 may store images of various food ingredients in the database, and, when a new food ingredient is uploaded, it may update the database with a related image, moving image, or the like.

Additionally, by storing the video information captured by the cooking appliance 100, 200 together with the identification information of the cooking appliance 100, 200, it is possible to increase recognition accuracy in the process of recognizing food ingredients later.

The embodiment of FIG. 11 includes the processes (S310a to S330b) in which the server 500 performs the food ingredient recognition process using an image of the food ingredient transmitted from the cooking appliance 100, 200, retrieves video information corresponding to the recognized food ingredient, and transmits the retrieved video information to the control module.

The embodiment of FIG. 11 includes the processes (S350a to S360a) in which the control module 150 transmits information about a specific time point or image from the received video information to the server 500 and then controls the main body of the cooking appliance to perform the cooking.

The embodiment of FIG. 11 includes the processes (S360a to S380c) in which the control module 150 transmits the image captured during the cooking process of the cooking appliance 100, 200 to the server 500, and the server 500 uses the received image to generate the message guiding the cooking stop or the alarm or the cooking state, and transmits the message to the control module.

The embodiment of FIG. 11 includes the process (S380d) in which the control module 150 controls cooking, performs an alarm function, or displays a guide message according to a received message.

Although all components constituting the embodiment of the present invention have been described as being combined as one or operated in a state of being combined together, the present invention is not necessarily limited to this embodiment, and within the scope of the present invention's objectives, one or more of all the components may be optionally combined and operated. Also, although all the components may each be implemented as a single independent hardware, some or all of the components may optionally be combined and implemented as a computer program having program modules that perform some or all of the combined functions on one or more hardware. The codes and code segments constituting the computer program may be easily inferred by those skilled in the art to which the present invention pertains. Such a computer program may be stored on a computer-readable storage medium, and be read and executed by a computer, thereby implementing an embodiment of the present invention. The storage medium for the computer program includes storage medium such as magnetic recording medium, optical recording medium, and a semiconductor recording device. Additionally, the computer program implementing an embodiment of the present invention includes a program module that is transmitted in real time through an external device.

The above description has focused on embodiments of the present invention; however, various changes and modifications can be made by those of ordinary skill in the art. Therefore, it should be understood that such changes and modifications are included within the scope of the present invention, as long as they do not depart from the scope of the present invention.

**- Explanation of Reference numerals -**

| | | | |
|---|---|---|---|
| 100, 200: | Cooking appliances | 110: | Camera |
| 120: | Display module | 150: | Control module |
| 500: | Server | 600: | Terminal device |

## Claims

1. A cooking appliances cooking a food ingredient, the cooking appliance comprising:
a main body heating the food ingredient;
a camera capturing the food ingredient loaded in the main body; and
a control module performing a food ingredient recognition process on a food ingredient image captured by the camera, outputting a video information corresponding to the recognized food ingredient to a display module of the cooking appliance or transmitting the video information to a terminal device linked to the cooking appliance, and then, in response to a time point or image selected in the video information, setting cooking conditions of the main body or monitoring the cooking state of the main body to perform an alarm function.

2. The cooking appliance according to claim 1, wherein the video information is video information that has been previously captured and stored by the cooking appliance during a cooking process of a food ingredient loaded into the main body.

3. The cooking appliance according to claim 1, wherein the video information is video information storing an image of a cooking state of a food ingredient, which the control module has stored and received from other device.

4. The cooking appliance according to claim 1, wherein the video information includes at least one of cooking temperature and cooking time as meta information.

5. The cooking appliance according to claim 1, wherein the control module sets a cooking temperature or a cooking time of the main body by using meta information included in the video information.

6. The cooking appliance according to claim 1, wherein the control module sets a cooking temperature or a cooking time of the main body by using weight information or size information of a food ingredient included in metadata of the video information, or by comparing a size of a food ingredient of the video information with a size of a food ingredient loaded in the main body.

7. The cooking appliance according to claim 1, wherein the control module controls the camera to capture a cooking situation of the main body, and then, when cooking in the main body is completed, stores video information captured by the camera, or replaces previously stored video information with the captured video information.

8. The cooking appliance according to claim 1, wherein the recognition process is that the control module extracts a feature vector from an image capturing the loaded food ingredient, and then calculates a similarity between the feature vector and a feature vector of the video information to retrieve video information corresponding to the food ingredient.

9. The cooking appliance according to claim 1, wherein the control module performs image comparison using an image capturing a situation in which the loaded food ingredient is being cooked and the image at the selected time point in the video information, and then, when a similarity between the image at the selected time point and the captured image is equal to or greater than a reference value, stops cooking, or performs an alarm through the display module, or transmits an alarm message to the terminal device.

10. The cooking appliance according to claim 9, wherein the control module outputs an image capturing a food ingredient cooked in the main body through the display module, or transmits an image capturing to the terminal device.

11. A method for controlling cooking process by using visual cooking guide, the method comprising:
a step in which a camera of a cooking appliance captures a food ingredient loaded in a main body of the cooking appliance;
a step in which a control module of the cooking appliance performs a food ingredient recognition process on a food ingredient image captured by the camera to retrieve video information corresponding to the recognized food ingredient;
a step in which the control module outputs the video information to a display module of the cooking appliance, or transmits the video information to a terminal device linked to the cooking appliance; and
a step in which, in response to a selected time point or image in the video information, the control module sets a cooking condition of the main body, or monitors a cooking situation of the main body to perform an alarm function.

12. The method for controlling cooking process by using visual cooking guide of claim 11,
wherein the video information is video information that has been previously captured and stored by the cooking appliance during a cooking process of a food ingredient loaded into the main body, or video information storing an image of a cooking state of a food ingredient, which the control module has stored and received from other device.

13. The method for controlling cooking process by using visual cooking guide of claim 11, wherein the video information includes at least one of cooking temperature and cooking time as meta information, or includes weight or size information of a food ingredient in the video information as meta information.

14. The method for controlling cooking process by using visual cooking guide of claim 11, further comprising:
a step in which the control module controls the camera to capture a cooking situation of the main body, and then, when cooking in the main body is completed, stores video information captured by the camera, or replaces previously stored video information with the captured video information.

15. The method for controlling cooking process by using visual cooking guide of claim 11, further comprising:
a step in which the control module performs image comparison using an image capturing a situation in which the loaded food ingredient is being cooked and the image at the selected time point in the video information, and then, when a similarity between the image at the selected time point and the captured image is equal to or greater than a reference value, stops cooking, or performs an alarm through the display module, or transmits an alarm message to the terminal device.

16. The method for controlling cooking process by using visual cooking guide of claim 11, further comprising:
a step in which the control module outputs an image capturing a food ingredient cooked in the main body through the display module, or transmits an image capturing to the terminal device.

17. A method for controlling cooking process by using visual cooking guide, the method comprising:
a step in which a camera of a cooking appliance captures a food ingredient loaded in a main body of the cooking appliance;
a step in which a control module of the cooking appliance transmits a food ingredient image captured by the camera to a server;
a step in which the server performs a food ingredient recognition process using the transmitted image, retrieves video information corresponding to the recognized food ingredient, and transmits the video information to the control module;
a step in which the control module transmits information about a specific time point or image in the video information to the server, and then controls the main body of the cooking appliance to perform cooking;
a step in which the control module transmits an image captured during a cooking process of the cooking appliance to a server, and the server uses a received image to generate a message guiding cooking stop or alarm or a cooking state, and transmits the message to the control module; and
a step in which, according to the received message, the control module controls cooking, performs an alarm function, or displays a guide message on a display module of the cooking appliance.

18. The method for controlling cooking process by using visual cooking guide of claim 17,
wherein the video information is video information that has been previously captured by the cooking appliance during a cooking process of a food ingredient loaded into the main body and has been transmitted to the server, or video information storing an image of a cooking state of a food ingredient, which the control module has stored and received from other device.

19. The method for providing a cooking guide in the form of video and controlling a cooking process of claim 17,
wherein the video information includes at least one of cooking temperature and cooking time as meta information, or includes weight or size information of a food ingredient in the video information as meta information.

20. The method for controlling cooking process by using visual cooking guide of claim 17, further comprising:
a step in which the server performs image comparison using an image capturing a situation in which the loaded food ingredient is being cooked and the image at the selected time point in the video information, and then, determines whether a similarity between the image at the selected time point and the captured image is equal to or greater than a reference value.
